Europäisches Patentamt

European Patent Office

Office européen des brevets

(11) Publication number: **0 371 200**
**A1**

## EUROPEAN PATENT APPLICATION

(21) Application number: 89113583.2

(51) Int. Cl.5: **G01N 27/40, B01D 69/12**

(22) Date of filing: **24.07.89**

| | |
|---|---|
| The title of the invention has been amended (Guidelines for Examination in the EPO, A-III, 7.3).<br><br>(30) Priority: **29.11.88 US 277623**<br><br>(43) Date of publication of application:<br>**06.06.90 Bulletin 90/23**<br><br>(84) Designated Contracting States:<br>**DE FR GB** | (71) Applicant: **Hewlett-Packard Company**<br>**3000 Hanover Street**<br>**Palo Alto California 94304(US)**<br><br>(72) Inventor: **Mauze, Ganapati R.**<br>**1114 W. Knickerbocker Dr.**<br>**Sunnyvale, CA. 94087(US)**<br>Inventor: **Kiang, Teddy Tian**<br>**938-G La Mesa Terrance**<br>**Sunnyvale, CA. 94086(US)**<br><br>(74) Representative: **Liesegang, Roland, Dr.-Ing. et al**<br>**FORRESTER & BOEHMERT**<br>**Widenmayerstrasse 4**<br>**D-8000 München 22(DE)** |

(54) **Composite, gas-permeable membrane and method of making the same.**

(57) A composite, gas-permeable membrane (13) and a method for producing the membrane comprising polypropylene material (14) (preferably tubular) joined with block copolymer silicone rubber (15) material is disclosed. The composite, gas-permeable membrane (13) is made by dipping the polypropylene material (14) into a solution of block copolymer silicone rubber material (15) in a solvent which slowly evaporates once the substrate is removed from solution upon completion of dipping.

EP 0 371 200 A1

## Composite, Gas-Permeable Membrane and Method

TECHNICAL FIELD

The technical field of this invention is that of composite, gas-permeable membranes and methods, and in particular that of tubular composite, gas-permeable membranes and methods, for use in medical applications.

BACKGROUND OF THE INVENTION

Gas-permeable membranes of many kinds have been employed in many fields including medicine and chemistry for the detection of analyte gas concentrations dissolved in liquid. Particular interest in these fields has recently been directed toward in situ and in vivo detection of analyte gas concentrations, such as carbon dioxide and oxygen dissolved in the bodies of living organisms. Even the measurement of carbon dioxide and oxygen dissolved in the human bloodstream has been addressed.

For this purpose, various kinds of sensor arrangements have been developed, which rely upon the permeability of gas-permeable membranes in order to receive the analyte gases of interest for internal measurement. One such sensor arrangement includes a sensor portion which can be inserted by catheter into the arteries or veins of human subjects.

One portion of this sensor arrangement employs an optical fiber, tipped with a sensing element leading to an internally reflective end, and containing an analyte-responsive material, such as phenol red immobilized on a hydrophilic gel saturated with buffered, bicarbonate solution, in the case of carbon dioxide detection. The phenol red gel is contained in a tubular, gas-permeable membrane connecting the internally reflective end of the sensor arrangement with the optical fiber portion thereof. The gas-permeable membrane employed in this particular arrangement is permeable to carbon dioxide. In the buffered, bicarbonate solution, the pH of the solution, i.e., the negative logarithm of its concentration of hydrogen ions, is directly proportional to the local concentration of carbon dioxide. The phenol red in the sensor arrangement absorbs green light as a function of pH. Accordingly, the local blood concentration of analyte carbon dioxide can be detected by measuring the intensity of green light reflected back through the optical fiber from the reflective end of the sensor arrangement, as diminished by the amount of green light actually absorbed. As is well known, the amount of green light absorbed by the phenol red depends upon the concentration of hydrogen ions in the detector, which in turn depends upon the local concentration of carbon dioxide in the vicinity of the catheter sensor head permeable to carbon dioxide.

Other gaseous analytes can be detected with a similar, internally reflective detector. For example, according to one approach, local oxygen concentration can be measured by such a sensor arrangement, which again can be inserted into the human bloodstream by catheter. As before, the gas permeable membrane portion of the sensor arrangement is permeable to the analyte gas of interest. In this case, in lieu of using a carbon dioxide responsive gel, an oxygen responsive material composition, such as for example certain organosilicon compositions of continuous phase silicone, silica filler material, and a selected variably radiative material having an affinity for silica filler material, can be employed. With changing oxygen concentration, the luminescence or phosphorescence of the particular material composition employed changes as an indication thereof.

One kind of gas-permeable membrane which can be used with such kinds of detector arrangements can be made of thin, pliable sheets, pieces, or layers of silicone rubber, in view of the known gas permeability of membranes made of silicone rubber.

The construction of silicone rubber membranes, however, typically requires the use of a filler material which is dispersed within the structure of the silicone rubber molecules to give it dimensional stability. Unfortunately, silicone rubber material in combination with at least certain filler materials (such as silica, for example), tend to cause thrombus, or clotting, in the human bloodstream. Such clotting can be life-threatening. For this reason, silicone rubber membranes containing many typical filler materials are undesirable, in many instances, particularly when temporary or permanent implantation of the membrane is desired within the human body.

From a structural perspective, silicone rubber membranes containing filler material are moreover too thick dimensionally when made to a required level of structural integrity, particularly in terms of wall thickness, and consequently filler containing silicone rubber membranes are generally considered unacceptable for making membranes sensors for insertion into the human body with a catheter. The undue thickness of the membrane walls in catheter insertable sensor arrangements means that when the outer diameter of the membrane is subject to specific limits, the membrane inner diameter may be forced so small that the space needed for placement of remaining critical elements of the sensor arrangement, which are required to perform gas detection operations, is simply not available. Typically, it is desired to keep the outer diameter of the membrane sensor potion of the detector arrangement on the order of no more than about 180 microns or less; on the other hand, it is also desired that the inner diameter of the membrane be as close as possible to the value of the outer diameter. Silicone rubber membranes containing filler materials are thus unfortunately generally incapable of achieving the necessary small dimensions under specific strength requirements, because of their inherent bulkiness.

Another kind of known gas permeable membrane material is made of microporous polypropylene, coated by chemically bonding with plasma polymerized silicones. In particular, such silicone materials which are plasma polymerized include hexamethylcyclotrisiloxane and octamethylcyclotetrasiloxane. The underlying polypropylene may for example be Celgard 2400, acting as a substrate for silicone polymer deposition. This approach is described in A.S. Chawlas, Use of Plasma Polymerization for Preparing Silicone-Coated Membranes for Possible Use in Blood Oxygenators, **Artificial Organs**, pp. 92-99 (McGill University, February 1979).

In order to avoid direct oxygen-blood interaction, the pores in the microporous polypropylene are filled with the deposited plasma polymerized silicone. Since the deposited, plasma polymerized silicone is free of typical filler materials, enhanced blood compatibility is achieved for the detector arrangement. By virtue of the indicated plasma polymerization and deposition process, the silicone material used is closely, chemically bonded to the surface of the underlying polypropylene. However, the use of plasma polymerization techniques is expensive and requires specialized knowledge and technology which is frequently not available. With the use of other techniques, however, there is no assurance that the silicone material has been reliably joined with an underlying polypropylene layer, and that the desired silicone material joined therewith will be sufficiently durable for sustained use in a catheter arrangement, from a mechanical, structural perspective.

It is accordingly an object of the invention herein to develop a strong, durable, small-dimensional, composite, gas-permeable membrane which avoids the use of filler materials in the construction of the membrane.

It is another object of the invention to develop a strong, durable, small-dimensional, gas-permeable, composite membrane useful for medical and chemical detection applications.

Another object of the invention herein is to develop relatively thin-walled, composite, tubular membranes which are permeable to gas, and which have a diameter on the order of less than 180 micrometers.

It is further a object of the invention, to develop useful membrane materials for incorporation into analyte gas detectors inserted into the human bloodstream by catheter.

It is a further object of the invention, to develop techniques for making composite membranes useful in gas detection arrangements.

It is a further object of the invention, to develop membranes which are hydrophobic yet gas permeable, and which are structurally compact, yet sufficiently durable to survive catheter insertion into the human bloodstream.

It is further an object of the invention to develop a composite biomaterial having requisite physical properties for biological use, but additionally exhibiting good blood compatibility.

Another object of the invention is to develop a method for making a composite biomembrane which combines simplicity of manufacture with certainty of joinder between the materials combined to produce the composite biomembrane.

## SUMMARY OF THE INVENTION

According to the invention herein, a gas-permeable membrane is formed of a relatively thin sheet, piece, or layer of microporous polypropylene material securely joined with a highly durable form of silicone rubber material to fill substantially all of the pores in the polypropylene material on at least a single side thereof. Either one side or both sides of the polypropylene sheet of material are joined with the silicone rubber material. The polypropylene material is preferably tubular, and a block copolymer silicone rubber material is the highly durable form of silicone which is joined at a selected surface of the polypropylene material. The block copolymer silicone rubber material can, for example, be joined with the polypropylene material by dipping the polypropylene material into a block copolymer silicone rubber solution and then withdrawing the polypropylene material to permit the block copolymer silicone rubber material to dry out of solution and effectively to cover the polypropylene material on one side or both, depending upon how dipping operation is accomplished.

In order to produce a composite membrane which is permeable to gases, such as $CO_2$ or $O_2$, but which blocks electrolytes and is hydrophobic, the underlying polypropylene material is completely coated with block copolymer silicone rubber material, or at least on one side of the polypropylene material to ensure that all of the micropores in the polypropylene material are covered. This prevents bulk transport of electrolytes and water through the composite membrane, and, because of the silicone rubber constituent of the block copolymer silicone rubber material and its hydrophobicity, both hydrogen and OH⁻ ions are rejected by the composite membrane.

In order to ensure maintenance of physical integrity over time, particularly when introduced into living organisms, it is important that the composite membrane have considerable strength and durability. The strength and durability needed to establish desirable characteristics in the composite is established by the block copolymer constituent of the composite membrane, which comprises silicone rubber portions (e.g., dimethyl siloxane) and bis-phenol-a-carbonate, the latter component or constituent of the combination lending strength characteristics to the membrane. A workable copolymer is 55-60% dimethyl siloxane and 45-40% bisphenol-a-carbonate.

In order to establish a method to ensure complete coverage over the polypropylene and to ensure filling of all needed micropores, it is necessary to control the rate of solution evaporation during dip coating of the polypropylene material in a solution of block copolymer silicone material. Otherwise, the coating of the membrane may be pockmarked with a plurality of holes in the block copolymer silicone rubber coating over the polypropylene material. If evaporation of the solution proceeds too rapidly, it is believed an outer film develops at the surface of the drying coating of block copolymer silicone rubber material, while the bulk of the drying coating is still dissolved in solution. In such a situation, the block copolymer silicone rubber material is prevented from drying, bonding, and adhering upon the polypropylene material. Instead, the dried film extending over the still dissolved lower portions of the drying solution may pop open, exposing the underlying polypropylene, and possibly one or more of the micropores, through which bulk transport of undesired electrolytes and other materials might then proceed. One such preferred, slowly evaporating carrier medium and/or solvent for the coating solution is toluene.

DRAWING OF THE PREFERRED EMBODIMENT

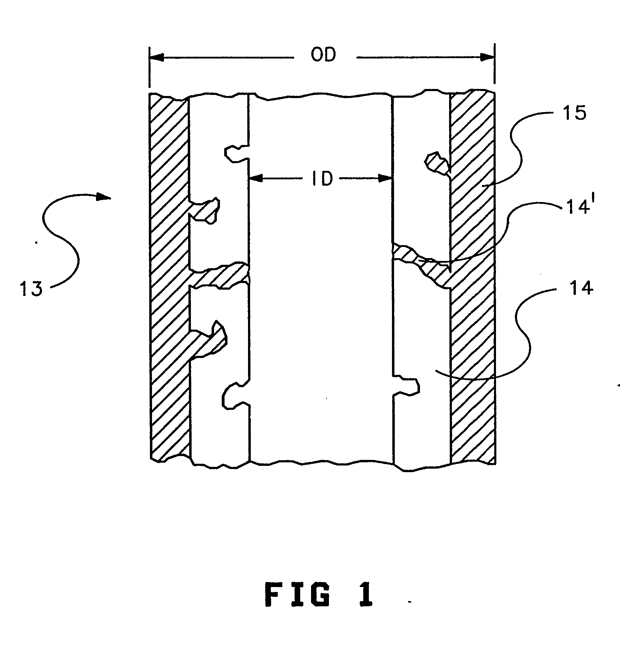

The drawing shows an axial cross-section of a tubular embodiment of the composite, gas-permeable membrane according to the invention herein.

DETAILED DESCRIPTION OF A PREFERRED VERSION OF THE INVENTION

The drawing shows a composite, gas-permeable membrane 13 including a tube of polypropylene material 14 joined with an outer layer of block copolymer silicone rubber material 15. As can be seen, the polypropylene material 14 defines a plurality of micropores 14′ in its surfaces. The inner diameter of the tube of polypropylene material 14 is in this instance on the order of less than 180 micrometers.

The polypropylene material 14, alone, is microporous, allowing the bulk transport or passage of gasses and materials such as electrolytes therethrough, and, as a result of the particular cross-sections of the pores 14′ in the polypropylene materially, certain liquids as well.

One such block-copolymer is available in powder form from Huels America as Product No. PS099. Using different concentrations of the solvent toluene, the thickness of the block copolymer silicone rubber material applied to the polypropylene material 14, and accordingly that of the gas permeable membrane 13 itself as well, can be adjusted.

The passage of gases through composite, gas-permeable membrane 13 occurs by solution-diffusion process. However, gases, electrolyte, and small molecules of some liquids can also pass through the micropores 14′ of membrane 13 by bulk flow as well, unless they are intentionally blocked or excluded. Joining block copolymer silicone rubber material 15 with one or both of the surfaces of the polypropylene material 14 does not hinder or affect the transport of dissolved gases by the solution-diffusion process in any significant way or to any substantial degree. However, filling of the micropores by coating the polypropylene material 19 with block copolymer silicone rubber material 15 cuts off the paths of bulk flow for liquids and electrolytes through the composite membrane 13.

The character of joinder between the silicone rubber 15 and the polypropylene material 14 is based substantially upon the mechanical binding strength of adjacent rough surfaces of the polypropylene material 14 and the block copolymer silicone rubber material 15.

Polypropylene material 14 for this embodiment is commercially available in small diameter tube sizes, which small tubes of polypropylene material 14 are capable of supporting thin layers of silicone rubber material 15. Because of the thin walls of the polypropylene material 14, the resultant composite membrane 13 manufactured with no more than another material that being the block copolymer silicone rubber material 15, is not much greater in diameter than the original, bare tube of polypropylene material 17. The polypropylene material 14 thus contributes to the establishment of a composite, gas-permeable membrane 13 having substantial mechanical strength and durability, as well as diminutive size, particularly suiting the membrane 13 for intraarterial applications, such as catherization. The polypropylene material 14 which can be used in accordance with the invention herein can be obtained from Hoechst-Celanese Corporation in the form of hollow, porous fibers or tubes.

The polypropylene material 14 can be coated with any of a variety of block copolymer silicone rubber materials 15 dissolved in a solvent such as for example trichloroethane, methylene chloride, toluene, or chloroform. Direct coating with silicone rubber alone, such as polydimethyl siloxane dissolved in chloroform, has been shown not to provide a coating of acceptable durability. With such a coating, transport of ions through the membrane occurs to a measurable extent, indicating not all micropores 14' were sealed by the indicated coating. Neither is it possible with the silicone rubber copolymer solution PS254, a 10-12% solution of a fully-cured thermoplastic silicone block copolymer in chlorinated solvent, supplied by Huels America, to produce an acceptably durable silicone rubber block copolymer material 15 film on polypropylene material 14. The film thus established is not acceptably strong and ruptures easily upon handling.

Neither are acceptable results achievable with the solution of the block copolymer, dimethylsiloxane (about 55-60% by weight) with bis-phenol-a-carbonate (45-40%), in a methylene chloride solvent. The resulting coating is found to be pocked with pin holes, due presumably to fast evaporation on the surface of the film deposited and slow evaporation of the solvent trapped below the film created, which effectively creates pin-holes in the film by bursting through the film surface.

However, with the same block copolymer again using 55-60% dimethyl siloxane in mixture with 45-40% methylene chloride, but dissolved in toluene solvent instead of methylene chloride, an acceptably durable block copolymer silicone rubber material 15 layer is effectively joined with the polypropylene material 14, thereby establishing complete micropore 14' coverage.

Dipping the polypropylene material 14 into a preferred solution of block copolymer dissolved in toluene thus establishes an acceptably durable and complete coating of block copolymer silicone rubber material 15 upon the polypropylene material 14. The resulting coverage layer is about twenty-five (25) to forty (40) microns thick. Accomplishing dip-coating several times can establish a desirably thicker coating of block copolymer silicone rubber material 15. Alternatively, increased thickness of the block copolymer silicone rubber material 15 can be accomplished by diluting the toluene solution to a lesser extent.

One intended application of the indicated gas-permeable membrane 13 is for use in blood gas sensor arrangements employed for intraarterial measurements of $CO_2$ and $O_2$ concentrations, i.e., partial pressures. Very little space is available in catheters for inserting such sensors. The outer diameter of the sensor portion of the detector arrangement is accordingly very small, e.g., as small or smaller than two hundred (200) microns. A sufficiently large (e.g. on the order of about 140 micron diameter optical fiber is required in the detector arrangement to ensure acceptably good optical signal communication. The inner diameter (ID) of the composite, gas-permeable membrane 13 tube is also on the order of 140 micron so that the membrane 13 can conveniently overlap the edge of the optical fiber in the detector arrangement. These conflicting requirements between an optimally maximum inner diameter and optimally minimal outer diameter necessitate that the wall of the gas permeable membrane 13 be as thin as possible. Most thin walled membranes are inherently weak and may rupture under the mechanical stresses of catherization. However, a composite membrane of block copolymer silicone rubber material 15 and polypropylene material 14, even with a very thin coating of the block copolymer silicone rubber material 15, has sufficient mechanical strength and durability, to withstand the normal stresses of catherization.

In addition to being thin-walled and durable, the composite, gas-permeable membrane 13 herein acts as a good barrier for electrolytes and liquids of all kinds, making the membrane 13 particularly effective for $CO_2$ and $O_2$ detector arrangements. The silicone rubber constituent of the block copolymer silicone rubber material 15 is hydrophobic and is generally considered to be a good barrier for such fluids. However, silicone rubber material alone is very weak at small wall thicknesses. Thus, the desirable structural properties of polypropylene are combined with those of block copolymer silicone rubber materials, to establish a particularly thin-walled, gas-permeable, composite membrane 13, which prevents the bulk flow of liquids and electrolytes therethrough, while nonetheless exhibiting a desirable level of material durability and completeness of coverage for all of the micropores 14' on at least one side of the polypropylene material 14. The resultant composite membrane 13 can be in the form of small-diameter composite membrane tubes insertable into a liquid environment which carries dissolved analyte gases of interest for sensing operation. While the micropores 14' are plugged with block copolymer silicone rubber material 15 to prevent bulk transport of both gases and small molecule liquids including, for example, electrolytes, diffusion processes thereacross and therethrough are permitted. Complete coverage is ensured by applying the block copolymer silicone rubber material 15 in a solution of slowly evaporating solvent, such as toluene for example.

According to one method, the particular block copolymer preferred, i.e., selected silicone rubber with bis-phenol-a-carbonate, is initially dissolved into the solvent, toluene, to establish a five (5) percent by weight solution thereof. Then, tubular pieces of polypropylene material 14 are suitably cut to size, e.g., into five (5) centimeter lengths. The tubular pieces of polypropylene material 14 are next ultrasonically cleaned in isopropyl alcohol. The cleaned pieces of polypropylene are then dried at room temperature in dust-free air under a laminar-flow hood. The cleaned pieces of polypropylene material 14 are next dipped or immersed into the dissolved block copolymer silicone rubber material 15 solution for about ten (10) minutes. After completion of this immersion period, the lengths of polypropylene material 14 pieces are removed from solution and permitted to dry in dust-free air for about four hours. The resulting tubular, composite membrane 13 is thus completely coated, without formation of any pin-holes in the block copolymer silicone rubber material 15, which might coincide with micropores 14 in the polypropylene material 14 substrate (as can conveniently be verified by scanning electron microscope). Thus, no inadvertent bulk liquid or gaseous transport of gas and/or liquid is able to occur through the composite gas-permeable membrane 13.

With the indicated five (5) percent solution of block copolymer silicone rubber material 15, a coating on the polypropylene material 14 on the order of about ten (10) microns in thickness can be achieved. Greater thicknesses can be obtained with higher concentration solutions of the block copolymer silicone rubber material 15. Conversely, lower coating thicknesses can be achieved with lower solution concentrations thereof.

The version of the invention described above is but a single indication of the possible range and scope of the invention addressed herein. The actual scope of the invention is, however, specifically indicated in the claims which follows.

## Claims

1. A composite, gas-permeable membrane, **characterized** by polypropylene material (14) having at least a single side and micropores (14') defined therein, and block-copolymer material (15) joined with said at least one of said sides of said polypropylene material.

2. The membrane according to claim 1, **characterized** in that said polypropylene material (14) is tubular.

3. The membrane according to claim 2, **characterized** in that the diameter of said tube of polypropylene material (14) is less than a value on the order of 180 micrometers.

4. The membrane according to one of the preceding claims, **characterized** in that said block-copolymer material (15) includes silicone rubber.

5. The membrane according to one of the preceding claims, **characterized** in that said block-copolymer material (15) includes means for strengthening said block-copolymer material.

6. The membrane according to claim 5, **characterized** in that said means for strengthening includes bis-phenol-a-carbonate.

7. A method of making a composite, gas-permeable membrane, **characterized** by
(1) selecting a piece of polypropylene material (14),
(2) preparing a solution including a block copolymer silicone rubber material (15),
(3) dipping said polypropylene material (14) in said solution, and
(4) withdrawing said polypropylene material (14) from said solution to permit said block-copolymer silicone rubber material (15) to join therewith.

8. The method according to claim 7, **characterized** by selecting the thickness of said block copolymer silicone rubber material (15) to be joined with said polypropylene material (14) by setting the concentration of said block polymer silicone rubber material in said solution.

9. The method according to claim 7 or 8, **characterized** by dissolving said block-copolymer silicone rubber material (15) in a solvent which evaporates at a rate sufficient to permit consistent joinder of said block-copolymer material with said substrate material.

10. The method according to one of claims 7 to 9, **characterized** by dissolving said block copolymer silicone rubber material (15) in toluene.

FIG 1

EP 0 371 200 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | ARTIFICIAL ORGANS, vol. 3, no. 1, February 1979, pages 92-96; A.S. CHAWLA: "Use of plasma polymerization for preparing silicone-coated membranes for possible use in blood oxygenators" * Whole article * | 1 | G 01 N 27/40 B 01 D 69/12 |
| A | PATENT ABSTRACTS OF JAPAN, vol. 9, no. 91 (C-277)[1814], 19th April 1985; & JP-A-59 225 703 (SUMITOMO DENKI KOGYO K.K.) 18-12-1984 * Abstract * | 1 | |
| A | PATENT ABSTRACTS OF JAPAN, vol. 8, no. 168 (C-236)[1605], 3rd August 1984; & JP-A-59 66 308 (MATSUSHITA DENKI SANGYO K.K.) 14-04-1984 * Abstract * | 1 | |

TECHNICAL FIELDS
SEARCHED (Int. Cl.5)

G 01 N
B 01 D

The present search report has been drawn up for all claims

| Place of search | Date of completion of the search | Examiner |
|---|---|---|
| THE HAGUE | 27-12-1989 | BAROCCI S. |

EPO FORM 1503 03.82 (P0401)